# EUROPÄISCHE PATENTSCHRIFT

(11) **EP 3 671 289 B1**
(45) Veröffentlichungstag und Bekanntmachung des Hinweises auf die Patenterteilung: **24.03.2021**
(21) Anmeldenummer: 18215649.7
(22) Anmeldetag: 21.12.2018
(51) Int. Cl.: G01V 8/18, G01S 17/04, G01S 17/10, F16P 3/14, G01V 8/14

(54) **SENSORANORDNUNG**
SENSOR ASSEMBLY
SYSTÈME DE DÉTECTION

(43) Veröffentlichungstag der Anmeldung: 24.06.2020
(73) Patentinhaber: Leuze electronic GmbH + Co. KG, 73277 Owen/Teck (DE)
(72) Erfinder: Polo, Francisco, 08640 Olesa de Montserrat (Barcelona) (ES); Gallastegui, Inaki, 08348 Cabrils (Barcelona) (ES); Ruiz, Juan Carlos, 48490 Miraballes (Bizkaia) (ES); Brunner, Rolf, 82223 Eichenau (DE)
(74) Vertreter: Ruckh, Rainer Gerhard

(56) Entgegenhaltungen:
- US-A1- 2005 207 619
- US-A1- 2013 187 032
- US-A1- 2018 347 752
- Sick Ag: "BETRIEBSANLEITUNG microScan3 - EFI-pro Sicherheits-Laserscanner", , 25. Oktober 2018 (2018-10-25), XP055601873, Gefunden im Internet: URL:https://www.sick.com/media/docs/0/70/6 70/Operating_instructions_microScan3_EFI_p ro_de_IM0077670.PDF [gefunden am 2019-07-03]

## Beschreibung

Die Erfindung betrifft eine Sensoranordnung und ein Verfahren zum Betrieb einer Sensoranordnung.

Derartige Sensoranordnungen umfassen generell einen optischen Sensor, der insbesondere als Flächendistanzsensor ausgebildet sein kann.

Ein Flächendistanzsensor weist typischerweise einen Distanzsensor mit einem Lichtstrahlen emittierenden Sender und einem Lichtstrahlen empfangenden Empfänger auf. Die Lichtstrahlen des Senders werden periodisch in einen Winkelbereich abgelenkt und tasten so in einzelnen Scans einen Überwachungsbereich ab.

Derartige optische Sensoren werden typischerweise im Bereich der Sicherheitstechnik eingesetzt und sind daher als Sicherheitssensoren, d. h. als Sensoren mit einem fehlersicheren Aufbau ausgebildet.

Ein Anwendungsbereich eines solchen optischen Sensors ist die Gefahrenbereichsüberwachung an einer gefahrbringenden Anlage. In diesem Fall ist im optischen Sensor ein Schutzfeld hinterlegt, das an den Gefahrenbereich der Anlage angepasst ist. Mit dem optischen Sensor erfolgt dann eine Objektdetektion derart, dass abhängig davon, ob im Schutzfeld ein Objekt erfasst wird oder nicht, ein binäres Objektfeststellungssignal generiert wird, dessen Schaltzustände angeben, ob sich ein Objekt im Schutzfeld befindet oder nicht. Wird ein Objekt im Schutzfeld erfasst und ein entsprechendes Objektfeststellungssignal generiert, wird dadurch eine Sicherheitsfunktion derart ausgelöst, dass die Anlage stillgesetzt wird.

In komplexeren Anwendungen, beispielsweise in Zugangskontrollsystemen werden mobile Transferobjekte wie z. B. Fahrzeuge, insbesondere fahrerlose Transportfahrzeuge, durch einen Gefahrenbereich bewegt. Auch derartige Gefahrenbereiche werden mit optischen Sensoren abgesichert. Hier besteht jedoch das Problem, dass die Transferobjekte keine gefahrenbringenden Objekte darstellen. Um unnötige Stillstandzeiten zu vermeiden, darf die Detektion eines solchen Transferobjekts durch den optischen Sensor nicht zum Auslösen einer Sicherheitsfunktion führen.

Um dieses Problem zu lösen ist es bekannt, dem optischen Sensor zur Gefahrenbereichsüberwachung zusätzlich Muting-Sensoren zuzuordnen. Wird mit den Muting-Sensoren das Transferobjekt erkannt, wird der optische Sensor gemutet, d. h. stummgeschaltet, so dass dieser keine Sicherheitsfunktion mehr auslöst. Der Einsatz derartiger Muting-Sensoren ist jedoch konstruktiv aufwändig. Zudem kann mit derartigen Muting-Sensoren die Bahn des Transferobjekts durch den Gefahrenbereich oft nur unzureichend verfolgt werden.

Die US 2013/0187032 A1 betrifft einen optischen Sensor in Form eines scannenden Distanzsensors. Der optische Sensor erfüllt eine Sicherheitsfunktion, in dem innerhalb eines Schutzfeldes und eines Wamfeldes Objekte erfasst werden. Das Warnfeld umgibt das Schutzfeld.

In Sick Ag: "BETRIEBSANLEITUNG microScan 3 - EPI-pro Sicherheits-Laserscanner", 25. Oktober 2018 (2018-10-25), ist ein Sicherheits-Laserscanner beschrieben, mit dem eine Schutzfeldüberwachung durchgeführt wird. Dabei können zur Objektüberwachung ein Schutzfeld und ein Warnfeld definiert werden, wobei das Warnfeld eine größere Ausdehnung als das Schutzfeld aufweist. Weiterhin kann mit einem Referenzkonturfeld eine Kontur in der Umgebung überwacht werden.

Die DE 103 60 174 A1 betrifft eine Vorrichtung zur Überwachung eines Erfassungsbereichs an einem Arbeitsmittel mit einer Lichtstrahlen emittierenden Beleuchtungseinheit zur Beleuchtung des Erfassungsbereichs und mit einer Kamera zur Ermittlung dreidimensionaler Bilder des Erfassungsbereichs. Die Kamera weist eine matrixförmige Anordnung von Empfangselementen auf, deren Ausgangssignale in einer Auswerteeinheit ausgewertet werden, wobei für jedes Empfangselement ein Distanzwert aus der Lichtlaufzeit der von der Beleuchtungseinheit emittierten und aus dem Erfassungsbereich zurückreflektierten Lichtstrahlen ermittelt wird. Mit der Auswerteeinheit wird wenigstens ein auf das Arbeitsmittel geführter Schaltausgang angesteuert, so dass das Arbeitsmittel nur dann in Betrieb gesetzt ist, falls sich kein Objekt im Erfassungsbereich befindet. Innerhalb des Erfassungsbereiches kann ein Schutzfeld und eine diesem vorgelagerte Warnzone definiert werden.

Die US 2018/0347752 A1 betrifft eine Sicherheitseinrichtung mit wenigstens einem optischen Sensor, der zur Überwachung einer Schutzzone ausgebildet ist. Dabei wird insbesondere überwacht, ob sich ein Objekt entlang eines vordefinierten, zulässigen Wegs bewegt. Weicht das Objekt von dem zulässigen Weg ab, wird eine Alarmmeldung generiert.

Der Erfindung liegt die Aufgabe zugrunde eine Sensoranordnung der eingangs genannten Art bereitzustellen, welche bei konstruktiv geringem Aufwand eine hohe Funktionalität aufweist.

Zur Lösung dieser Aufgabe sind die Merkmale der unabhängigen Ansprüche vorgesehen, vorteilhafte Ausführungsformen und zweckmäßige Weiterbildungen der Erfindung sind in den abhängigen Ansprüchen beschrieben.

Die Erfindung betrifft eine Sensoranordnung nach Anspruch 1 mit wenigstens einem als optischer Sensor ausgebildeten Sensor zur Erfassung von Objekten in einem Überwachungsbereich. Der Sensor ist für eine Verfolgung eines entlang einer definierten, vorgegebenen Bahnkurve bewegten Transferobjekts ausgebildet. Im Sensor sind ein Konturerkennungsfeld und ein Überwachungsschutzfeld abhängig von der Position des Transferobjekts aktiviert. Das Konturerkennungsfeld ist dem Überwachungsschutzfeld in Richtung des Transferobjekts vorgelagert und das Transferobjekt ist vom Überwachungsschutzfeld ausgespart. Der Sensor löst bei Eindringen eines Objekts in das Überwachungsschutzfeld eine Sicherheitsfunktion aus, wobei im Sensor eine Sequenz von Paaren von Konturerkennungsfeldern und Überwachungsschutzfeldem gespeichert ist. Abhängig von der aktuellen Position des Transferobjekts ist ein Konturerkennungsfeld und ein zugeordnetes Überwachungsschutzfeld aktiviert.

Die Erfindung betrifft weiterhin ein Verfahren nach Anspruch 22 zum Betrieb einer Sensoranordnung.

Die erfindungsgemäße Sensoranordnung wird bevorzugt im Bereich der Sicherheitstechnik eingesetzt, wobei hierzu der optische Sensor als Sicherheitssensor, d. h. Sensor mit einem fehlersicheren Aufbau ausgebildet ist.

Dem optischen Sensor ist eine Steuerung zugeordnet, die zur Erfüllung der Anforderungen für einen Einsatz im Bereich der Sicherheitstechnik als Sicherheitssteuerung ausgebildet ist.

Der wesentliche Vorteil der erfindungsgemäßen Sensoranordnung besteht darin, dass mit nur einem optischen Sensor eine Gefahrenbereichsüberwachung derart durchgeführt wird, dass dann, wenn mit dem optischen Sensor ein Objekteingriff in einem Überwachungsschutzfeld festgestellt wird, eine Sicherheitsfunktion ausgelöst wird, und dass zugleich mit dem optischen Sensor eine Verfolgung eines Transferobjekts, wie z. B. eines Fahrzeugs ermöglicht wird, und zwar derart, dass die Detektion des Transferobjekts mit dem optischen Sensor nicht zum Auslösen einer Sicherheitsfunktion führt.

Dadurch wird bei geringem konstruktivem Aufwand eine hohe Funktionalität der Sensoranordnung erzielt. Mit der Sensoranordnung können komplexe Applikationen einer Gefahrenbereichsüberwachung realisiert werden. Insbesondere eignet sich die Sensoranordnung für den Einsatz in Zugangskontrollsystemen. Dort wird ein Transferobjekt, insbesondere ein Fahrzeug entlang einer bestimmten Bahnkurve auf einen Zugang einer Anlage oder dergleichen bewegt. Der das Transferobjekt umgebende Bereich, nicht jedoch das Transferobjekt selbst, bildet einen Gefahrenbereich, der auf das Eindringen sicherheitskritischer Objekte überwacht werden muss.

Erfindungsgemäß ist, jeweils angepasst an die aktuelle Position des Transferobjekts, im optischen Sensor ein Konturerkennungsfeld und ein daran angepasstes Überwachungsschutzfeld vorgegeben.

Das Konturerkennungsfeld ist dem Überwachungsschutzfeld in Richtung des Transferobjekts vorgelagert, d. h. das Konturerkennungsfeld eilt dem Überwachungsschutzfeld aus Sicht des optischen Sensors voraus. Vorteilhaft sind die Formen und die Sequenz des Konturerkennungsfeldes derart ausgebildet, dass nur das Transferobjekt das Konturerkennungsfeld unterbrechen kann.

Das Überwachungsschutzfeld ist generell so ausgebildet, dass es das Transferobjekt ausspart, wobei ansonsten das Überwachungsschutzfeld eine beliebige Form aufweisen kann.

Das Transferobjekt bewegt sich entlang einer vorgegebenen Bahnkurve, wobei die Geschwindigkeit des Transferobjekts vorteilhaft, aber nicht zwingend konstant ist.

Im optischen Sensor sind für die einzelnen Positionen des Transferobjekts jeweils ein Konturerkennungsfeld und ein Überwachungsschutzfeld hinterlegt.

Mit dem jeweils aktiven Konturerkennungsfeld wird das Transferobjekt erfasst. In dem Überwachungsschutzfeld werden andere, gefahrbringende Objekte detektiert.

Damit kann während der gesamten Fahrt des Transferobjekts durch Objekterfassungen im Überwachungsschutzfeld mittels des optischen Sensors der gesamte Gefahrenbereich vor dem und seitlich vom Transferobjekt überwacht werden, wobei bei Eindringen eines Objekts in das Überwachungsschutzfeld der optische Sensor eine geeignete Sicherheitsfunktion wie einen Stoppbefehl für eine Anlage oder die Abgabe einer Störungsmeldung generiert. Im fehlerfreien Fall, d. h. wenn sich das Transferobjekt entlang einer vorgegebenen Bahn bewegt, liegt das Transferobjekt stets außerhalb des Überwachungsschutzfelds, so dass Detektionen des Transferobjekts mittels des optischen Sensors nicht zu einer unnötigen Auslösung der Sicherheitsfunktion führen. Ändert sich jedoch im Fehlerfall die Geschwindigkeit oder Bewegungsrichtung des Transferobjekts, so kann das Transferobjekt in das Überwachungsschutzfeld eindringen, so dass der optische Sensor die Sicherheitsfunktion auslöst.

Erfindungsgemäß ist im optischen Sensor eine Sequenz von Paaren von Konturerkennungsfeldern und Überwachungsschutzfeldern gespeichert. Abhängig von der aktuellen Position des Transferobjekts ist ein Konturerkennungsfeld und ein zugeordnetes Überwachungsschutzfeld aktiviert.

Hierbei wird ausgenutzt, dass die Bahnkurve des Transferobjekts bekannt ist. Entsprechend der vorgegebenen, im optischen Sensor bekannten Bahnkurve wird aus der Sequenz der gespeicherten Paare von Konturerkennungsfeld und Überwachungsschutzfeld für die jeweils aktuelle Position des Transferobjekts das passende Paar eines Konturerkennungsfelds und Überwachungsschutzfelds aktiviert.

Die Aktivierung könnte prinzipiell im optischen Sensor selbsttätig in einem vorgegebenen Zeitraster erfolgen. Auch kann die Aktivierung über die Sicherheitssteuerung erfolgen.

Besonders vorteilhaft erfolgt beim Registrieren eines Objekteingriffs im aktuell aktivierten Konturerkennungsfeld eine Umschaltung auf ein neues Konturerkennungsfeld und ein dem neuen Konturerkennungsfeld zugeordnetes Überwachungsschutzfeld.

Die Umschaltung kann im optischen Sensor selbst erfolgen. Besonders vorteilhaft erfolgt die Umschaltung in der Sicherheitssteuerung. Hierzu generiert die Sicherheitssteuerung entsprechende Ausgangssignale, die in den optischen Sensor eingelesen werden. Hierzu verarbeitet die Sicherheitssteuerung Ausgangssignale des optischen Sensors für das Konturerkennungsfeld und dem Überwachungsschutzfeld, die jeweils über einen sicheren Ausgang des optischen Sensors an die Sicherheitssteuerung ausgegeben werden.

Dabei erfolgt eine Umschaltung auf ein neues Konturerkennungsfeld nur dann, wenn nur im aktuell aktivierten Konturerkennungsfeld, nicht aber im aktuell definierten Überwachungsschutzfeld ein Objekteingriff registriert wird.

Das Umschalten des Konturerkennungsfelds und dadurch bedingt des Überwachungsschutzfelds erfolgt somit ereignisgesteuert dadurch, dass durch die Bewegung des Transferobjekts das jeweils aktuelle Konturerkennungsfeld nach einer gewissen Zeitspanne durch das Transferobjekt selbst verletzt wird. Da nach Verletzung des aktuellen Konturerkennungsfelds das nächste Konturerkennungsfeld mit einem neuen Überwachungsschutzfeld aktiviert wird, ist gewährleistet, dass das Überwachungsschutzfeld durch das Transferobjekt nicht verletzt wird, so dass ein unnötiges Auslösen der Sicherheitsfunktion unterbleibt.

Um ein fehlerhaftes Umschalten des Konturerkennungsfelds und Überwachungsschutzfelds zu verhindern muss gewährleistet sein, dass nur eine Verletzung des aktuellen Konturerkennungsfelds durch das Transferobjekt selbst, nicht aber durch ein anderes Objekt zum Umschalten des Konturerkennungsfelds und Überwachungsschutzfelds führt.

Vorteilhaft ist hierzu vorgesehen, dass mit dem Sensor als Messdaten Positionen, Größen und/oder Konturen von Objekten im Konturerkennungsfeld bestimmt werden, und dass eine Umschaltung auf ein neues Konturerkennungsfeld nur dann erfolgt, wenn anhand der Messdaten das Transferobjekt erkannt ist.

Dabei wird vorteilhaft mit dem Konturerkennungsfeld nur ein Teil des Transferobjekts, insbesondere ein Teil der Front des Transferobjekts erfasst. Durch die Form und Sequenz des Konturerkennungsfelds ist sichergestellt, dass nur das Transferobjekt das Konturerkennungsfeld unterbrechen kann und nicht andere Objekte, die sich in der Nähe des Transferobjekts aufhalten. Diese anderen Objekte werden vielmehr im Überwachungsschutzfeld detektiert, was zu einem Auslösen der Sicherheitsfunktion führt.

Damit kann das Transferobjekt eindeutig von anderen Objekten unterschieden werden.

Gemäß einer vorteilhaften Ausführungsform wird im optischen Sensor oder in der Sicherheitssteuerung die zeitliche Abfolge von Umschaltungen von Konturerkennungsfeldem überwacht.

Hierzu wird die aktuell ermittelte zeitliche Abfolge von Umschaltungen mit einer Soll-Abfolge verglichen. Bei einer Abweichung der zeitlichen Abfolge von der Soll-Abfolge wird ein Anfangswert des Konturerkennungsfelds und des zugehörigen Überwachungsschutzfelds aktiviert.

Damit wird eine zusätzliche Sicherungsfunktion bereitgestellt, indem unkontrollierte Abweichungen von der vorgegebenen Bahnkurve selbst erkannt werden, wobei bei einer festgestellten Abweichung entsprechende Gegenmaßnahmen eingeleitet werden, die unsichere Zustände vermeiden. Wird nämlich nach Zurücksetzen des Konturerkennungsfelds auf den Anfangswert das Transferobjekt im aktuellen Überwachungsschutzfeld erkannt, löst der optische Sensor die Sicherheitsfunktion aus.

Alternativ zur zeitlichen Überwachung kann ein Teil des Konturerkennungsfeldes mit einer sogenannten Referenzkontur versehen sein. Eine Referenzkontur definiert ein Toleranzband um einen Teil des Konturerkennungsfelds. Nur wenn die Messwerte über den gesamten Bereich der Referenzkontur innerhalb des Toleranzbands sind, schaltet der zum Konturerkennungsfeld zugehörige Ausgang ein. Auf diese Weise kann das Konturerkennungsfeld an die Geometrie des Transferobjekts angepasst werden, so dass ein Umschalten von Konturerkennungsfeldern mit anderen Objekten nicht möglich ist.

Gemäß einer weiteren vorteilhaften Ausführungsform ist das Transferobjekt mit einem Markierungsobjekt gekennzeichnet. Eine Umschaltung auf ein neues Konturerkennungsfeld erfolgt nur dann, wenn das Markierungsobjekt mit dem Sensor erfasst wird.

Das Markierungsobjekt unterscheidet sich vorteilhaft von der restlichen Oberfläche des Transferobjekts und kann so eindeutig mit dem Sensor erfasst werden. Beispielsweise ist das Markierungsobjekt von einem Reflektor gebildet. Der Sensor kann die Position des Markierungsobjekts bestimmen. Alternativ oder zusätzlich wird das Markierungsobjekt, insbesondere der Reflektor, anhand der empfangsseitig im Sensor registrierten Signalstärken erkannt.

Gemäß einer weiteren vorteilhaften Ausführungsform ist im Transferobjekt eine Sensoreinheit integriert, mittels derer die Position des Transferobjekts durch Erfassung von Markierungen auf einer Fahrbahn für das Transferobjekt bestimmt wird. In Abhängigkeit der Positionen erfolgt die Umschaltung des Konturerkennungsfelds und Überwachungsschutzfelds.

Die Markierungen können als optische Markierungen, Barcodes, QR-Codes, RFID-Tags oder dergleichen ausgebildet sein.

Die von der Sensoreinheit generierten Signale werden dem Sensor oder der Steuerung zugeführt, wo dann die Umschaltung des Konturerkennungsfelds und Überwachungsschutzfelds erfolgen kann.

Gemäß einer weiteren vorteilhaften Ausführungsform ist ein Distanzsensor zur Bestimmung der Position des Transferobjekts vorgesehen, wobei die Umschaltung von Konturerkennungsfeld und Überwachungsschutzfeld in Abhängigkeit von Distanzwerten des Distanzsensors erfolgt.

Auch in diesem Fall werden die Signale des Distanzsensors dem Sensor oder der Steuerung zugeführt, wo dann die Umschaltung des Konturerkennungsfelds und Überwachungsschutzfelds erfolgen kann.

Gemäß einer vorteilhaften Ausgestaltung der Erfindung weist die Sensoranordnung Mittel zur Überwachung der Position des optischen Sensors auf.

Dabei weist dieses ein außerhalb des optischen Sensors ortsfest angeordnetes Referenzobjekt auf. Mit dem optischen Sensor wird zur Überwachung einer Position das Referenzobjekt ortsaufgelöst erfasst.

Vorteilhaft weist das Referenzobjekt eine charakteristische Form oder Struktur auf, so dass dieses im optischen Sensor von anderen Objekten eindeutig unterschieden werden kann.

Damit können Manipulationen derart, dass die Position des optischen Sensors verändert wird, aufgedeckt werden. Das ist deshalb erforderlich, da die im optischen Sensor gespeicherten Konturerkennungsfelder und Überwachungsschutzfelder auf eine definierte Montageposition des optischen Sensors bezogen sind, die somit genau eingehalten werden muss.

Die Funktion des optischen Sensors ist generell derart, dass abhängig von einer Objektdetektion im Überwachungsschutzfeld ein binäres Objektfeststellungssignal generiert wird. Die Schaltzustände des Objektfeststellungssignals geben an, ob sich ein Objekt im Überwachungsschutzfeld befindet oder nicht. Wird ein Objektfeststellungssignal generiert, dessen Schaltzustand ein Objekt im Überwachungsschutzfeld signalisiert, wird die Sicherheitsfunktion ausgelöst.

Der optische Sensor kann gemäß einer ersten Variante als 2D-Kamera oder 3D-Kamera ausgebildet sein. Mit der Kamera können somit zwei- oder dreidimensionale Entfernungsbilder aufgenommen werden.

Gemäß einer zweiten Variante ist der optische Sensor ein scannender Distanzsensor.

Prinzipiell kann mit einem derartigen scannenden Distanzsensor ein dreidimensionaler Raumbereich abgebildet werden. Weiterhin kann auch nur ein flächiger Bereich abgescannt werden. In diesem Fall bildet der optische Sensor einen Flächendistanzsensor.

Ein derartiger Flächendistanzsensor weist einen Distanzsensor mit einem Sender und Empfänger auf. Die Lichtstrahlen des Senders sind dabei periodisch in einem flächigen Überwachungsbereich geführt.

Je nach Ausführungsart werden die Lichtstrahlen des Senders mit einer Ablenkeinheit abgelenkt oder der Distanzsensor ist in einem rotierenden Messkopf integriert.

Die Erfindung wird im Folgenden anhand der Zeichnungen erläutert. Es zeigen:
- Figur 1:: Ausführungsbeispiel der erfindungsgemäßen Sensoranordnung für eine Gefahrenbereichsüberwachung.
- Figur 2:: Erstes Ausführungsbeispiel eines optischen Sensors für die Sensoranordnung gemäß Figur 1.
- Figur 3:: Zweites Ausführungsbeispiel eines optischen Sensors für die Sensoranordnung gemäß Figur 1.
- Figur 4a-4d:: Konfigurationen im Konturenkennungsfeld und Überwachungsschutzfeld für unterschiedliche Positionen eines Transferobjekts im Gefahrenbereich der Anordnung gemäß Figur 1.
- Figur 5:: Ausschnitt der Konfiguration gemäß Figur 4c bei einer Verletzung des Konturerkennungsfelds durch das Transferobjekt.

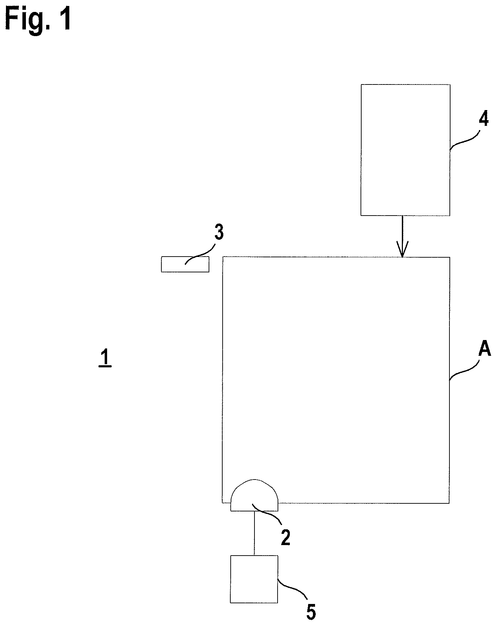

Figur 1 zeigt schematisch ein Ausführungsbeispiel der erfindungsgemäßen Sensoranordnung 1, die als wesentliche Komponenten einen optischen Sensor 2 und ein zugeordnetes Referenzobjekt 3 aufweist. Mit dem optischen Sensor 2 erfolgt eine Absicherung eines Gefahrenbereichs A. Durch den Gefahrenbereich A führt ein Transferobjekt 4 insbesondere ein Fahrzeug entlang einer definierten Bahnkurve. Im vorliegenden Fall passiert das Transferobjekt 4 den Gefahrenbereich A mit einer konstanten Geschwindigkeit. Der optische Sensor 2 ist an eine Sicherheitssteuerung 5 angeschlossen.

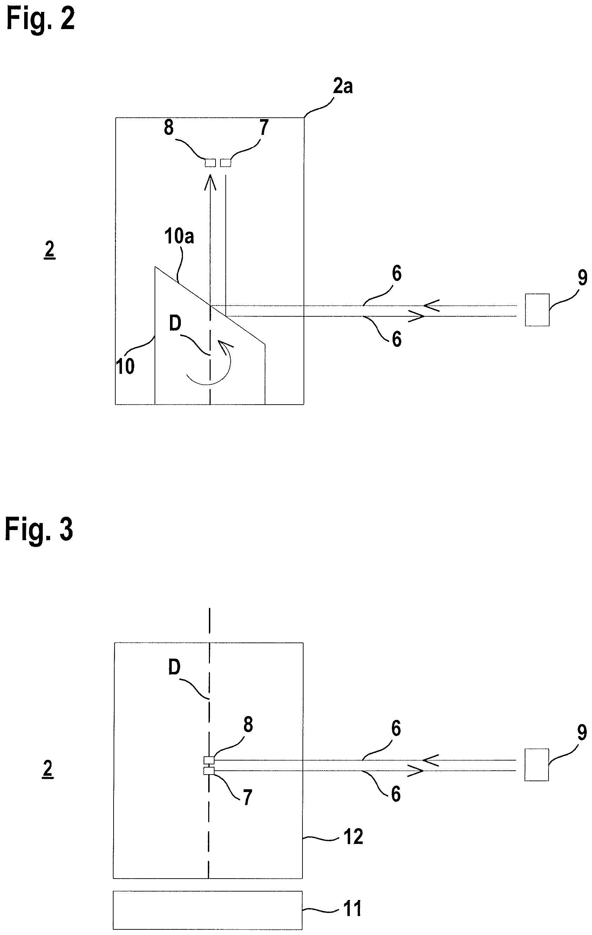

Figur 2 zeigt einen optischen Sensor 2 in Form eines Flächendistanzsensors. Der Flächendistanzsensor weist einen in einem Gehäuse 2a stationär angeordneten Distanzsensor mit einem Lichtstrahlen 6 emittierenden Sender 7 und einem Lichtstrahlen 6 empfangenden Empfänger 8 auf. Der Sender 7 ist beispielsweise von einer Laserdiode gebildet, der Empfänger 8 von einer APD (Avalanche-Photodiode). Die Bestimmung der Distanzen von Objekten 9 erfolgt beispielsweise nach einem Puls-Laufzeit-Verfahren, wobei hierzu der Sender 7 Lichtstrahlen 6 in Form von Lichtpulsen emittiert. Die vom Sender 7 emittierten Lichtstrahlen 6 wie auch die von einem zu detektierenden Objekt 9 zurückreflektierten Lichtstrahlen 6 werden über eine Spiegelfläche 10a einer Ablenkeinheit 10 geführt. Durch die Drehbewegung der motorisch getriebenen Ablenkeinheit 10 um eine Drehachse D werden die Lichtstrahlen 6 in einem Winkelbereich abgelenkt. Durch Ermittlung der Distanzen mit dem Distanzsensor und durch die Ermittlung der aktuellen Ablenkpositionen können Positionen von Objekten 9 insbesondere innerhalb eines Schutzfelds erfasst werden.

Figur 3 zeigt eine Variante des Flächendistanzsensors gemäß Figur 2. Der Flächendistanzsensor gemäß Figur 3 unterscheidet sich vom Flächendistanzsensor gemäß Figur 2 dadurch, dass der Sender 7 und Empfänger 8 des Distanzsensors in einem auf einem Sockel 11 gelagerten, um eine Drehachse D drehbaren Messkopf 12 gelagert sind.

Bei den Flächendistanzsensoren der Figuren 2 und 3 wird mit den Lichtstrahlen 6 durch deren Ablenkbewegung ein flächiger Überwachungsbereich mit einer Folge von Scans periodisch abgetastet.

Der optische Sensor 2 weist eine nicht dargestellte Auswerteeinheit auf, in welcher aus den Empfangssignalen des Empfängers 8 und den aktuellen Ablenkpositionen der Lichtstrahlen 6 die Positionen von Objekten 9 bestimmt werden.

Der optische Sensor 2 ist im vorliegenden Fall als Sicherheitsscanner ausgebildet. Hierzu weist die Auswerteeinheit einen fehlersicheren redundanten Aufbau auf, vorzugsweise in Form zweier sich gegenseitig zyklisch überwachender Recheneinheiten.

Der optische Sensor 2 ist so ausgebildet, dass mit diesem Objekte 9 im gesamten Gefahrenbereich A erfasst werden können. Hierzu ist der optische Sensor 2 in einer Sollposition an einem Rand des Gefahrenbereichs A stationär angeordnet.

Die Überprüfung der Sollposition des optischen Sensors 2 erfolgt dadurch, dass mit diesem periodisch das Referenzobjekt 3 erfasst wird, welches am gegenüberliegenden Rand des Gefahrenbereichs A oder generell außerhalb des Gefahrenbereichs A stationär angeordnet ist. Das Referenzobjekt 3 weist eine charakteristische Geometrie oder Struktur auf und kann so eindeutig von anderen Objekten 9 unterschieden werden. Wird das Referenzobjekt 3 vom optischen Sensor 2 in einer Sollposition erkannt, ist der optische Sensor 2 richtig montiert. Falls dies nicht der Fall ist, gibt der optische Sensor 2 eine Störmeldung aus.

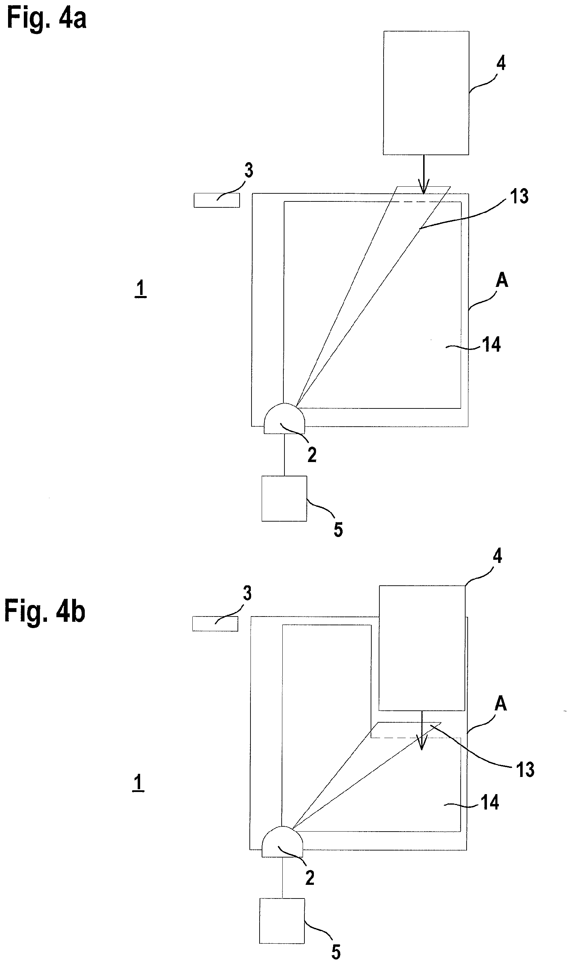

Das Transferobjekt 4 bewegt sich entlang einer vorgegebenen Bahnkurve, insbesondere mit konstanter Geschwindigkeit entlang einer geraden Bahn durch den Gefahrenbereich A. Daran angepasst werden im optischen Sensor 2 zeitabhängig ein dazu angepasstes Konturerkennungsfeld 13 und ein Überwachungsschutzfeld 14 aktiviert. Alternativ zur zeitabhängigen Aktivierung eines neuen Konturerkennungsfelds 13 und eines zugehörigen Überwachungsschutzfelds 14 kann diese Umschaltung auch durch das Eindringen des Transferobjekts 4 in das Konturerkennungsfeld 13 erfolgen. Wie die Figuren 4a bis 4d zeigen, eilt das Konturerkennungsfeld 13 dem Überwachungsschutzfeld 14 aus Sicht des optischen Sensors 2 voraus, wobei das Konturerkennungsfeld 13 keilförmig ausgebildet ist. Mit dem längs einer Geraden verlaufenden vorderen Rand des Konturerkennungsfelds 13 kann ein Teil der Front des Transferobjekts 4 erkannt werden. Das Überwachungsschutzfeld 14 ist stets so ausgebildet, dass dieses das Transferobjekt 4 ausspart. Ansonsten ist die Kontur des Überwachungsschutzfelds 14 beliebig wählbar.

Für die einzelnen Positionen des Transferobjekts 4 im Gefahrenbereich A sind jeweils ein hierzu angepasstes Konturerkennungsfeld 13 und abhängig hiervon ein Überwachungsschutzfeld 14 aktiviert. Die Gesamtheit aller Paare von Konturerkennungsfeldem 13 und Überwachungsschutzfeldern 14 ist in der Auswerteeinheit des optischen Sensors 2 abgespeichert. Abhängig von der aktuellen Position des Transferobjekts 4 wird ein passendes Paar eines Konturerkennungsfelds 13 und ein Überwachungsschutzfeld 14 aktiviert.

Die Figuren 4a bis 4d zeigen für unterschiedliche Positionen das jeweils aktivierte Konturerkennungsfeld 13 und das aktivierte Überwachungsschutzfeld 14.

Bei der in Figur 4a dargestellten Ausgangssituation befindet sich das Transferobjekt 4 außerhalb des Gefahrenbereichs A, so dass sich das aktivierte Überwachungsschutzfeld 14 über den gesamten Gefahrenbereich A erstrecken kann. Das keilförmige Konturerkennungsfeld 13 ist an die Bahnkurve des Transferobjekts 4 angepasst.

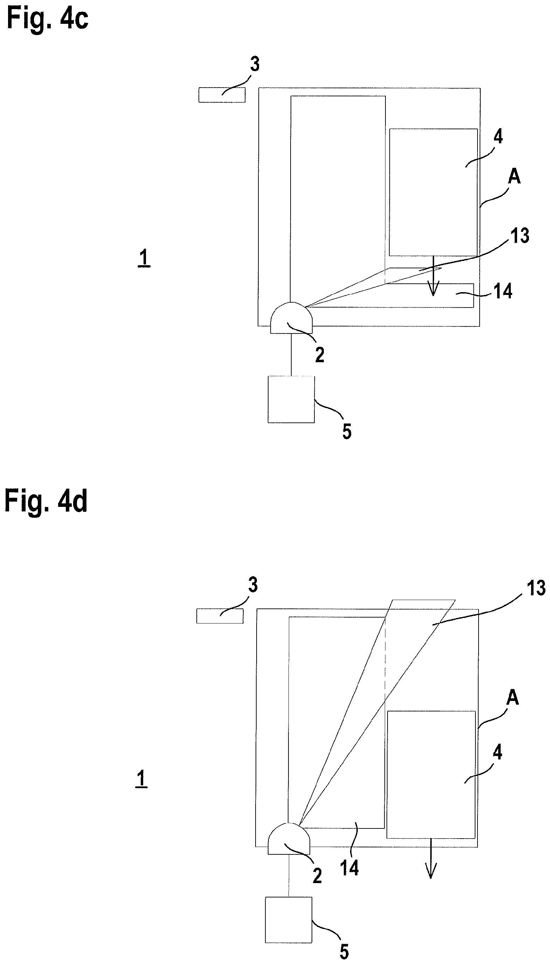

Die Figuren 4b bis 4d zeigen das Transferobjekt 4 bei Durchqueren des Gefahrenbereichs A. Wie aus diesen Darstellungen ersichtlich, ist das jeweils aktivierte Konturerkennungsfeld 13 so dimensioniert, dass mit diesem ein Teil der Front des Transferobjekts 4 erfasst werden kann. Das jeweils aktivierte Überwachungsschutzfeld 14 ist jeweils an die Kontur des Transferobjekts 4 so angepasst, dass das Transferobjekt 4 vom Überwachungsschutzfeld 14 ausgespart ist. Hat das Transferobjekt 4 den Rand des Gefahrenbereichs A erreicht, springt das Konturerkennungsfeld 13 in seine Anfangsposition zurück (Figur 4d).

Die Funktion des optischen Sensors 2 ist derart, dass dieser abhängig davon ob mit diesem ein Objekt 9 im aktuellen Überwachungsschutzfeld 14 erfasst wird oder nicht, ein binäres Objektfeststellungssignal generiert wird, dessen Schaltzustände angeben, ob sich ein Objekt 9 im Überwachungsschutzfeld 14 befindet oder nicht. Wird vom optischen Sensor 2 ein Objektfeststellungssignal mit dem Schaltzustand "Objekt im Überwachungsschutzfeld vorhanden" angegeben, wird, beispielsweise in der Sicherheitssteuerung 5, eine Sicherheitsfunktion ausgelöst. Die Sicherheitsfunktion kann eine Störmeldung oder ein Stoppbefehl für eine Anlage sein.

Mit der an die Position des Transferobjekts 4 angepassten Vorgabe des Konturerkennungsfelds 13 erfolgt eine Anpassung des jeweils aktivierten Überwachungsschutzfelds 14 derart, dass im fehlerfreien Fall das Transferobjekt 4 nicht in das Überwachungsschutzfeld 14 ragt und somit keine Sicherheitsfunktion auslöst. Das Transferobjekt 4 kann so ungehindert den Gefahrenbereich A passieren.

Die Anpassung des Konturerkennungsfelds 13 und des Überwachungsschutzfelds 14 erfolgt anhand der im optischen Sensor 2 abgespeicherten Sequenzen des Konturerkennungsschutzfelds 13 und Überwachungsschutzfelds 14 durch Umschaltvorgänge. Die Umschaltvorgänge erfolgen durch die Sicherheitssteuerung 5. Prinzipiell könnte die Umschaltung auch im optischen Sensor 2 erfolgen.

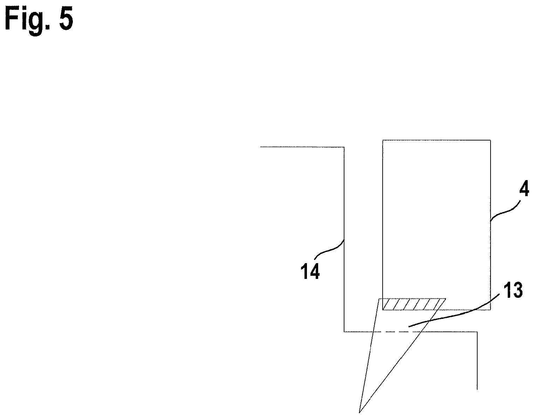

Diese Umschaltvorgänge werden anhand der Figuren 4c und 5 erläutert. Figur 4c zeigt das aktuell aktivierte Konturerkennungsfeld 13 und das aktuell aktivierte Überwachungsschutzfeld 14, wenn das Transferobjekt 4 vollständig in den Gefahrenbereich A eingefahren wird. Das Transferobjekt 4 bewegt sich derart gleichförmig weiter und verletzt dann, wie in Figur 5 dargestellt mit dem gestrichelt hervorgehobenen Bereich das Konturerkennungsfeld 13, d. h. das Transferobjekt 4 dringt in das Konturerkennungsfeld 13 ein.

Da somit im optischen Sensor 2 die Verletzung des Konturerkennungsfelds 13 durch das Transferobjekt 4 registriert wird, erfolgt, bevor das Transferobjekt 4 in das Überwachungsschutzfeld 14 eindringt ein Umschalten auf das nächste Paar eines_Konturerkennungsfelds 13 und Überwachungsschutzfelds 14, wo das Transferobjekt 4 das Konturerkennungsfeld 13 und das Überwachungsschutzfeld 14 nicht verletzt.

Auf diese Weise werden das Konturerkennungsfeld 13 und das Überwachungsschutzfeld 14 fortlaufend an die aktuelle Position angepasst, so dass immer das aktuell aktivierte Überwachungsschutzfeld 14 das Transferobjekt 4 ausspart.

Wäre das Konturerkennungsfeld 13 nicht, wie in Figur 5 dargestellt, vom Transferobjekt 4 verdeckt worden sondern von einem anderen Objekt 9, wäre die Schutzfeldumschaltung unterbrochen, das Objekt 9 wäre dann in das Überwachungsschutzfeld 14 eingedrungen und der optische Sensor 2 hätte die Sicherheitsfünktion ausgelöst.

In der Sicherheitssteuerung 5 erfolgt als zusätzliche Sicherheitsmaßnahme eine Überwachung der zeitlichen Abfolge von Umschaltungen der Konturerkennungsfelder 13 und damit eine Überwachung der zeitlichen Abfolge der Aktivierung der Konturerkennungsfelder 13 und der zugeordneten Überwachungsschutzfelder 14. Hierbei wird ausgenutzt, dass die Bahnkurve des Transferobjekts 4 im fehlerfreien Fall im optischen Sensor 2 bekannt und hinterlegt ist. Daraus wird eine zeitliche Soll-Abfolge von aktivierten Konturerkennungsfeldern 13 abgeleitet, die im optischen Sensor 2 hinterlegt wird. Die aktuelle Abfolge der Aktivierung von Konturerkennungsfeldern 13 wird dann mit der Soll-Abfolge verglichen. Werden dabei Abweichungen der aktuellen Abfolge von der Soll-Abfolge registriert, beispielsweise aufgrund eines fehlerhaften Betriebs des Transferobjekts 4, der zu plötzlichen Richtungs- oder Geschwindigkeitsänderungen führt, so wird im optischen Sensor 2 das Konturerkennungsfeld 13 auf seinen Anfangswert (entsprechend der in Figur 4a dargestellten Konfiguration) gesetzt. Befindet sich daraufhin das Transferobjekt 4 noch im Gefahrenbereich A und damit im neu aktivierten Überwachungsschutzfeld 14 so generiert der optische Sensor 2 ein Objektfeststellungssignal, das zur Auslösung der Sicherheitsfunktion führt.

Alternativ zur zeitlichen Überwachung kann zumindest ein Teil des Konturerkennungsfelds 13 mit einer Referenzkontur versehen sein, die an die Kontur des Transferobjekts 4 angepasst ist. Bei einer Referenzkontur müssen über den gesamten Bereich der Referenzkontur alle Messwerte innerhalb eines Toleranzbandes sein. Nur wenn dies der Fall ist, schaltet der optische Sensor 2 seinen Ausgang, der dem Konturerkennungsfeld 13 zugeordnet ist, ein. Dadurch ist eine Unterscheidung zwischen dem Transferobjekt 4 und einem anderen Objekt 9 möglich.

### Bezugszeichenliste

- (1): Sensoranordnung
- (2): Optischer Sensor
- (2 a): Gehäuse
- (3): Referenzobjekt
- (4): Transferobjekt
- (5): Sicherheitssteuerung
- (6): Lichtstrahl
- (7): Sender
- (8): Empfänger
- (9): Objekt
- (10): Ablenkeinheit
- (10a): Spiegelfläche
- (11): Sockel
- (12): Messkopf
- (13): Konturerkennungsfeld
- (14): Überwachungsschutzfeld

- (A): Gefahrenbereich
- (D): Drehachse

## Patentansprüche

1. Sensoranordnung (1) mit einem als optischer Sensor (2) ausgebildeten Sensor zur Erfassung von Objekten (9) in einem Überwachungsbereich, wobei der Sensor für eine Verfolgung eines entlang einer definierten, vorgegebenen Bahnkurve bewegten Transferobjekts (4) ausgebildet ist, wobei im Sensor ein Konturerkennungsfeld (13) und ein Überwachungsschutzfeld (14) abhängig von der Position des Transferobjekts (4) aktiviert sind, wobei das Konturerkennungsfeld (13) dem Überwachungsschutzfeld (14) in Richtung des Transferobjekts (4) vorgelagert ist und das Transferobjekt (4) vom Überwachungsschutzfeld (14) ausgespart ist, und wobei der Sensor bei Eindringen eines Objekts (9) in das Überwachungsschutzfeld (14) eine Sicherheitsfunktion auslöst, wobei im Sensor eine Sequenz von Paaren von Konturerkennungsfeldern (13) und Überwachungsschutzfeldern (14) gespeichert ist, und wobei abhängig von der aktuellen Position des Transferobjekts (4) ein Konturerkennungsfeld (13) und ein zugeordnetes Überwachungsschutzfeld (14) aktiviert ist.

2. Sensoranordnung (1) nach Anspruch 1, **dadurch gekennzeichnet, dass** die Formen und die Sequenz des Konturerkennungsfeldes (13) derart ausgebildet sind, dass nur das Transferobjekt (4) das Konturerkennungsfeld (13) unterbrechen kann.

3. Sensoranordnung (1) nach einem der Ansprüche 1 oder 2, **dadurch gekennzeichnet, dass** bei Registrieren eines Objekteingriffs im aktuell aktivierten Konturerkennungsfeld (13) im Sensor eine Umschaltung auf ein neues Konturerkennungsfeld (13) und ein dem neuen Konturerkennungsfeld (13) zugeordnetes Überwachungsschutzfeld (14) erfolgt.

4. Sensoranordnung (1) nach Anspruch 3, **dadurch gekennzeichnet, dass** eine Umschaltung auf ein neues Konturerkennungsfeld (13) nur dann erfolgt, wenn nur im aktuell aktivierten Konturerkennungsfeld (13), nicht aber im aktuell aktivierten Überwachungsschutzfeld (14) ein Objekteingriff registriert wird.

5. Sensoranordnung (1) nach Anspruch 4, **dadurch gekennzeichnet, dass** mit dem Sensor als Messdaten Positionen, Größen und/oder Konturen von Objekten (9) im Konturerkennungsfeld (13) bestimmt werden, und dass eine Umschaltung auf ein neues Konturerkennungsfeld (13) nur dann erfolgt, wenn anhand der Messdaten das Transferobjekt (4) erkannt ist.

6. Sensoranordnung (1) nach Anspruch 5, **dadurch gekennzeichnet, dass** eine Umschaltung auf ein neues Konturerkennungsfeld (13) nur dann erfolgt, wenn innerhalb des aktuell aktivierten Konturerkennungsfelds (13) wenigstens ein Abschnitt der Kontur des Transferobjekts (4) erkannt wird.

7. Sensoranordnung (1) nach Anspruch 6, **dadurch gekennzeichnet, dass** das Transferobjekt (4) mit einem Markierungsobjekt gekennzeichnet ist, und dass eine Umschaltung auf ein neues Konturerkennungsfeld (13) nur dann erfolgt, wenn das Markierungsobjekt mit dem Sensor erfasst wird.

8. Sensoranordnung (1) nach einem der Ansprüche 1 bis 4, **dadurch gekennzeichnet, dass** die zeitliche Abfolge von Umschaltungen von Konturerkennungsfeldern (13) überwacht wird.

9. Sensoranordnung (1) nach Anspruch 8, **dadurch gekennzeichnet, dass** die aktuell ermittelte zeitliche Abfolge von Umschaltungen mit einer Soll-Abfolge verglichen wird, und dass bei einer Abweichung der zeitlichen Abfolge von der Soll-Abfolge ein Anfangswert des Konturerkennungsfelds (13) aktiviert wird.

10. Sensoranordnung (1) nach einem der Ansprüche 1 bis 4, **dadurch gekennzeichnet, dass** zumindest ein Teil des Konturerkennungsfelds (13) als Referenzkontur ausgebildet ist.

11. Sensoranordnung (1) nach einem der Ansprüche 1 bis 4, **dadurch gekennzeichnet, dass** im Transferobjekt (4) eine Sensoreinheit integriert ist, mittels derer die Position des Transferobjekts (4) durch Erfassung von Markierungen auf einer Fahrbahn für das Transferobjekt (4) bestimmt wird, und dass in Abhängigkeit der Positionen die Umschaltung des Konturerkennungsfelds (13) und Überwachungsschutzfelds (14) erfolgt.

12. Sensoranordnung (1) nach einem der Ansprüche 1 bis 4, **dadurch gekennzeichnet, dass** ein Distanzsensor zur Bestimmung der Position des Transferobjekts (4) vorgesehen ist, wobei die Umschaltung von Konturerkennungsfeld (13) und Überwachungsschutzfeld (14) in Abhängigkeit von Distanzwerten des Distanzsensors erfolgt.

13. Sensoranordnung (1) nach einem der Ansprüche 1 bis 12, **dadurch gekennzeichnet, dass** dem Sensor eine Steuerung zugeordnet ist.

14. Sensoranordnung (1) nach Anspruch 13, **dadurch gekennzeichnet, dass** die Steuerung eine Sicherheitssteuerung (5) ist.

15. Sensoranordnung (1) nach einem der Ansprüche 1 bis 14, **dadurch gekennzeichnet, dass** der Sensor ein Sicherheitssensor ist.

16. Sensoranordnung (1) nach einem der Ansprüche 13 bis 15, **dadurch gekennzeichnet, dass** die Umschaltung der Konturerkennungsfelder (13) und der Überwachungsschutzfelder (14) des Sensors in der Steuerung erfolgt.

17. Sensoranordnung (1) nach einem der Ansprüche 3 bis 16, **dadurch gekennzeichnet, dass** die Umschaltung der Konturerkennungsfelder (13) und der Überwachungsschutzfelder (14) des Sensors im Sensor erfolgt.

18. Sensoranordnung (1) nach einem der Ansprüche 1 bis 17, **dadurch gekennzeichnet, dass** diese Mittel zur Überwachung der Position des Sensors aufweist.

19. Sensoranordnung (1) nach Anspruch 18, **dadurch gekennzeichnet, dass** diese ein außerhalb des Sensors ortsfest angeordnetes Referenzobjekt (3) aufweist, und dass mit dem Sensor zur Überwachung einer Position das Referenzobjekt (3) ortsaufgelöst erfasst wird.

20. Sensoranordnung (1) nach einem der Ansprüche 1 bis 19, **dadurch gekennzeichnet, dass** mit dem Sensor die Sicherheitsfunktion dadurch generiert wird, dass dieser ein die Anwesenheit eines Objekts (9) im Überwachungsschutzfeld (14) signalisierendes Objektfeststellungssignal generiert.

21. Sensoranordnung (1) nach einem der Ansprüche 1 bis 20, **dadurch gekennzeichnet, dass** der Sensor ein Flächendistanzsensor oder eine 2D- oder 3D-Kamera ist.

22. Verfahren zum Betrieb einer Sensoranordnung (1) mit einem als optischer Sensor (2) ausgebildeten Sensor zur Erfassung von Objekten (9) in einem Überwachungsbereich, wobei der Sensor für eine Verfolgung eines entlang einer definierten, vorgegebenen Bahnkurve bewegten Transferobjekts (4) ausgebildet ist, wobei im Sensor zeitabhängig ein Konturerkennungsfeld (13) und ein Überwachungsschutzfeld (14) abhängig von der Position des Transferobjekts (4) aktiviert werden, wobei das Konturerkennungsfeld (13) dem Überwachungsschutzfeld (14) in Richtung des Transferobjekts (4) vorgelagert ist und das Transferobjekt (4) vom Überwachungsschutzfeld (14) ausgespart ist, und wobei der Sensor bei Eindringen eines Objekts (9) in das Überwachungsschutzfeld (14) eine Sicherheitsfunktion auslöst, wobei im Sensor eine Sequenz von Paaren von Konturerkennungsfeldern (13) und Überwachungsschutzfeldern (14) gespeichert ist, und wobei abhängig von der aktuellen Position des Transferobjekts (4) ein Konturerkennungsfeld (13) und ein zugeordnetes Überwachungsschutzfeld (14) aktiviert ist.

## Claims

1. A sensor assembly (1) with a sensor designed as an optical sensor (2) for detecting objects (9) in a monitoring area, wherein the sensor is designed for tracking a transfer object (4) moved along a defined, predetermined path curve, wherein a contour detection field (13) and a monitoring protection field (14) are activated in the sensor as a function of the position of the transfer object (4), wherein the contour detection field (13) is displaced from the monitoring protection field (14) in the direction of the transfer object (4) and the transfer object (4) is excluded from the monitoring protection field (14), and wherein the sensor triggers a safety function when an object (9) penetrates the monitoring protection field (14), wherein a sequence of pairs of contour detection fields (13) and monitoring protection fields (14) is stored in the sensor, and wherein a contour detection field (13) and an associated monitoring protection field (14) is activated depending on the current position of the transfer object (4).

2. The sensor assembly (1) according to claim 1, **characterised in that** the shapes and the sequence of the contour detection field (13) are designed in such a way that only the transfer object (4) can interrupt the contour detection field (13).

3. The sensor assembly (1) according to one of claims 1 or 2, **characterised in that** when an object intervention is registered in the currently activated contour detection field (13) in the sensor, a switchover to a new contour detection field (13) and a monitoring protection field (14) assigned to the new contour detection field (13) takes place.

4. The sensor assembly (1) according to claim 3, **characterised in that** a switchover to a new contour detection field (13) only takes place if an object intervention is registered only in the currently activated contour detection field (13), but not in the currently activated monitoring protection field (14).

5. The sensor assembly (1) according to claim 4, **characterised in that** the sensor is used to determine positions, sizes and/or contours of objects (9) in the contour detection field (13) as measurement data, and **in that** a switchover to a new contour detection field (13) only takes place when the transfer object (4) is detected on the basis of the measurement data.

6. The sensor assembly (1) according to claim 5, **characterised in that** a switchover to a new contour detection field (13) only takes place if at least one section of the contour of the transfer object (4) is detected within the currently activated contour detection field (13).

7. The sensor assembly (1) according to claim 6, **characterised in that** the transfer object (4) is marked with a marking object, and **in that** a switchover to a new contour detection field (13) only takes place when the marking object is detected with the sensor.

8. The sensor assembly (1) according to one of claims 1 to 4, **characterised in that** the time sequence of switchovers of contour detection fields (13) is monitored.

9. The sensor assembly (1) according to claim 8, **characterised in that** the currently determined temporal sequence of switchovers is compared with a desired sequence, and **in that** an initial value of the contour detection field (13) is activated in the event of a deviation of the temporal sequence from the desired sequence.

10. The sensor assembly (1) according to one of claims 1 to 4, **characterised in that** at least a part of the contour detection field (13) is designed as a reference contour.

11. The sensor assembly (1) according to one of claims 1 to 4, **characterised in that** a sensor unit is integrated in the transfer object (4), by means of which the position of the transfer object (4) is determined by detecting markings on a track for the transfer object (4), and **in that** the contour detection field (13) and monitoring protection field (14) are switched over as a function of the positions.

12. The sensor assembly (1) in accordance with one of claims 1 to 4, **characterised in that** a distance sensor is provided for determining the position of the transfer object (4), wherein the switching over of the contour detection field (13) and the monitoring protection field (14) takes place as a function of distance values of the distance sensor.

13. The sensor assembly (1) according to one of claims 1 to 12, **characterised in that** a controller is assigned to the sensor.

14. The sensor assembly (1) according to claim 13, **characterised in that** the control is a safety control (5).

15. The sensor assembly (1) according to one of claims 1 to 14, **characterised in that** the sensor is a safety sensor.

16. The sensor assembly (1) according to one of claims 13 to 15, **characterised in that** the switching of the contour detection fields (13) and the monitoring protection fields (14) of the sensor takes place in the control.

17. The sensor assembly (1) according to one of claims 3 to 16, **characterised in that** the switching of the contour detection fields (13) and the monitoring protection fields (14) of the sensor takes place in the sensor.

18. The sensor assembly (1) according to one of claims 1 to 17, **characterised in that** it comprises means for monitoring the position of the sensor.

19. The sensor assembly (1) according to claim 18, **characterised in that** it has a reference object (3) arranged stationary outside the sensor, and **in that** the reference object (3) is detected with spatial resolution by the sensor for monitoring a position.

20. The sensor assembly (1) according to one of claims 1 to 19, **characterised in that** the sensor is used to generate the safety function by generating an object detection signal signalling the presence of an object (9) in the monitoring protection field (14).

21. The sensor assembly (1) according to one of claims 1 to 20, **characterised in that** the sensor is an area distance sensor or a 2D or 3D camera.

22. A method for operating a sensor assembly (1) with a sensor designed as an optical sensor (2) for detecting objects (9) in a monitoring area, the sensor being designed for tracking a transfer object (4) moved along a defined, predetermined path curve, a contour detection field (13) and a monitoring protection field (14) being activated in the sensor in a time-dependent manner as a function of the position of the transfer object (4), wherein the contour detection field (13) is positioned in front of the monitoring protection field (14) in the direction of the transfer object (4) and the transfer object (4) is left out of the monitoring protection field (14), and wherein the sensor triggers a safety function when an object (9) penetrates the monitoring protection field (14), wherein a sequence of pairs of contour detection fields (13) and monitoring protection fields (14) is stored in the sensor, and wherein a contour detection field (13) and an associated monitoring protection field (14) is activated depending on the current position of the transfer object (4).

## Revendications

1. Ensemble de détection (1) muni d'un capteur réalisé en tant que capteur optique (2) dévolu à la détection d'objets (9) dans une zone de surveillance, lequel capteur est conçu pour suivre un objet de transfert (4) mis en mouvement le long d'une trajectoire préétablie bien définie, sachant qu'un champ (13) d'identification de profils et un champ (14) de protection de surveillance sont activés, dans ledit capteur, en fonction de l'emplacement de l'objet de transfert (4), sachant que ledit champ (13) d'identification de profils est placé en amont dudit champ (14) de protection de surveillance dans la direction dudit objet de transfert (4), lequel objet de transfert (4) est omis du champ (14) de protection de surveillance, et sachant que ledit capteur déclenche une fonction de sécurité en cas de pénétration d'un objet (9) dans ledit champ (14) de protection de surveillance, une séquence de paires de champs (13) d'identification de profils et de champs (14) de protection de surveillance étant stockée dans ledit capteur, un champ (13) d'identification de profils, et un champ associé (14) de protection de surveillance, étant activés en fonction de l'emplacement effectif dudit objet de transfert (4).

2. Ensemble de détection (1) selon la revendication 1, **caractérisé par le fait que** les formes et la séquence du champ (13) d'identification de profils sont conçues de telle sorte que seul l'objet de transfert (4) puisse interrompre ledit champ (13) d'identification de profils.

3. Ensemble de détection (1) selon l'une des revendications 1 ou 2, **caractérisé par le fait qu'**il s'opère dans le capteur, en cas d'enregistrement d'une intrusion d'objet dans le champ (13) d'identification de profils activé en temps réel, une commutation vers un nouveau champ (13) d'identification de profils et vers un champ (14) de protection de surveillance associé audit nouveau champ (13) d'identification de profils.

4. Ensemble de détection (1) selon la revendication 3, **caractérisé par le fait qu'**une commutation vers un nouveau champ (13) d'identification de profils a lieu uniquement lorsqu'une intrusion d'objet est enregistrée seulement dans le champ (13) d'identification de profils activé en temps réel, mais toutefois pas dans le champ (14) de protection de surveillance activé en temps réel.

5. Ensemble de détection (1) selon la revendication 4, **caractérisé par le fait que** des emplacements, des tailles et/ou des profils d'objets (9) sont déterminé(e)s à l'aide du capteur dans le champ (13) d'identification de profils, en tant que données de mesure ; et **par le fait qu'**une commutation vers un nouveau champ (13) d'identification de profils a lieu uniquement lorsque l'objet de transfert (4) est identifié à l'appui desdites données de mesure.

6. Ensemble de détection (1) selon la revendication 5, **caractérisé par le fait qu'**une commutation vers un nouveau champ (13) d'identification de profils a lieu uniquement lorsqu'au moins une région du profil de l'objet de transfert (4) est identifiée à l'intérieur du champ (13) d'identification de profils activé en temps réel.

7. Ensemble de détection (1) selon la revendication 6, **caractérisé par le fait que** l'objet de transfert (4) est démarqué à l'aide d'un objet de repérage ; et **par le fait qu'**une commutation vers un nouveau champ (13) d'identification de profils a lieu uniquement lorsque ledit objet de repérage est détecté à l'aide du capteur.

8. Ensemble de détection (1) selon l'une des revendications 1 à 4, **caractérisé par** une surveillance de la succession chronologique de commutations de champs (13) d'identification de profils.

9. Ensemble de détection (1) selon la revendication 8, **caractérisé par le fait que** la succession chronologique de commutations, spécifiée en temps réel, est comparée à une succession de consigne ; et **par le fait qu'**une valeur initiale du champ (13) d'identification de profils est activée en cas d'écart de ladite succession chronologique par rapport à ladite succession de consigne.

10. Ensemble de détection (1) selon l'une des revendications 1 à 4, **caractérisé par le fait qu'**au moins une partie du champ (13) d'identification de profils est conçue en tant que profil de référence.

11. Ensemble de détection (1) selon l'une des revendications 1 à 4, **caractérisé par le fait qu'**une unité détectrice, au moyen de laquelle l'emplacement de l'objet de transfert (4) est déterminé par détection de repères sur une piste de déplacement dédiée audit objet de transfert (4), est intégrée dans ledit objet de transfert (4) ; et **par le fait que** la commutation du champ (13) d'identification de profils et du champ (14) de protection de surveillance a lieu en fonction des emplacements.

12. Ensemble de détection (1) selon l'une des revendications 1 à 4, **caractérisé par le fait qu'**un capteur de distances est prévu pour déterminer l'emplacement de l'objet de transfert (4), la commutation de champ (13) d'identification de profils et de champ (14) de protection de surveillance ayant lieu en fonction de valeurs de distances dudit capteur de distances.

13. Ensemble de détection (1) selon l'une des revendications 1 à 12, **caractérisé par le fait qu'**une commande est affectée au capteur.

14. Ensemble de détection (1) selon la revendication 13, **caractérisé par le fait que** la commande est une commande de sécurité (5).

15. Ensemble de détection (1) selon l'une des revendications 1 à 14, **caractérisé par le fait que** le capteur est un capteur de sécurité.

16. Ensemble de détection (1) selon l'une des revendications 13 à 15, **caractérisé par le fait que** la commutation des champs (13) d'identification de profils et des champs (14) de protection de surveillance du capteur s'opère dans la commande.

17. Ensemble de détection (1) selon l'une des revendications 3 à 16, **caractérisé par le fait que** la commutation des champs (13) d'identification de profils et des champs (14) de protection de surveillance du capteur s'opère dans ledit capteur.

18. Ensemble de détection (1) selon l'une des revendications 1 à 17, **caractérisé par le fait que** ce dernier est doté de moyens dédiés à la surveillance de l'emplacement du capteur.

19. Ensemble de détection (1) selon la revendication 18, **caractérisé par le fait que** ce dernier comporte un objet de référence (3), à implantation stationnaire à l'extérieur du capteur ; et **par le fait que** ledit objet de référence (3) est détecté, avec résolution de localisation, à l'aide du capteur affecté à la surveillance d'un emplacement.

20. Ensemble de détection (1) selon l'une des revendications 1 à 19, **caractérisé par le fait que** la fonction de sécurité est engendrée, à l'aide du capteur, du fait que ce dernier produit un signal de reconnaissance d'objet qui avertit de la présence d'un objet (9) dans le champ (14) de protection de surveillance.

21. Ensemble de détection (1) selon l'une des revendications 1 à 20, **caractérisé par le fait que** le capteur est un capteur de distances entre surfaces, voire une caméra 2D ou 3D.

22. Procédé d'exploitation d'un ensemble de détection (1) muni d'un capteur réalisé en tant que capteur optique (2) dévolu à la détection d'objets (9) dans une zone de surveillance, lequel capteur est conçu pour suivre un objet de transfert (4) mis en mouvement le long d'une trajectoire préétablie bien définie, sachant qu'un champ (13) d'identification de profils et un champ (14) de protection de surveillance sont activés d'une manière tributaire du temps, dans ledit capteur, en fonction de l'emplacement de l'objet de transfert (4), sachant que ledit champ (13) d'identification de profils est placé en amont dudit champ (14) de protection de surveillance dans la direction dudit objet de transfert (4), lequel objet de transfert (4) est omis du champ (14) de protection de surveillance, et sachant que ledit capteur déclenche une fonction de sécurité en cas de pénétration d'un objet (9) dans ledit champ (14) de protection de surveillance, une séquence de paires de champs (13) d'identification de profils et de champs (14) de protection de surveillance étant stockée dans ledit capteur, un champ (13) d'identification de profils, et un champ associé (14) de protection de surveillance, étant activés en fonction de l'emplacement effectif dudit objet de transfert (4).
